# EUROPEAN PATENT APPLICATION

(11) **EP 4 447 426 A1**
(43) Date of publication of application: **16.10.2024**
(21) Application number: 22952361.8
(22) Date of filing: 27.07.2022
(51) Int. Cl.: H04M 1/72448, H04M 1/72403

(54) **GRIP GESTURE RECOGNITION METHOD AND APPARATUS, DEVICE, STORAGE MEDIUM, AND CHIP**

(71) Applicant: Beijing Xiaomi Mobile Software Co., Ltd., Beijing 100085 (CN)
(72) Inventor: WANG, Rumeng, Beijing 100085 (CN); GAO, Wenjun, Beijing 100085 (CN)
(74) Representative: Zimmermann, Tankred Klaus
(86) International application number: PCT/CN2022/108405
(87) International publication number: WO 2024/020899

(57) **Abstract**

The present disclosure relates to the field of terminal production, and to a grip gesture recognition method and apparatus, a device, a storage medium, and a chip. The method comprises: acquiring first sensor data of a contact sensor arranged on a side bezel of a first screen of a terminal folding screen, acquiring a touch parameter of a second screen of the terminal folding screen, and determining a grip gesture in respect of a terminal according to the sensor data and the touch parameter, wherein the grip gesture comprises grip on a first side, grip on a second side or grip on both sides. By means of the technical solution, a grip gesture in respect of a terminal is determined by using first sensor data of a first screen of a folding screen and a touch parameter of a second screen, such that the grip gesture in respect of the folding screen terminal can be recognized, and the accuracy of recognizing the grip gesture in respect of the terminal is improved to a certain extent.

## Description

### TECHNICAL FIELD

The present invention relates to the field of terminal production, and particularly relates to a method and apparatus for recognizing a gripping posture of a terminal, an electronic device, and a storage medium.

### BACKGROUND OF THE INVENTION

As intelligent terminals have been booming, foldable-screen terminals also have emerged. The foldable-screen terminals have functions of ordinary single-screen terminals, and further foldable screens can be unfolded to expand terminal screens. However, the foldable-screen terminals have problems accordingly. Compared with the single-screen terminals, the foldable-screen terminals are controlled in a limited range with one hand when in use due to screen expansion. In the related art, most methods for recognizing a gripping posture of a user are applied to the single-screen terminals, and are not suitable for the foldable-screen terminals. Moreover, touch data or information of a deflection angle sensor is generally used for recognition, rendering a low accuracy rate of recognition. Thus, a gesture when a user holds a terminal is mistakenly determined.

### SUMMARY OF THE INVENTION

In order to solve the problems in the related art, the present invention provides a method and apparatus for recognizing a gripping posture, an electronic device, a storage medium, and a chip.

According to a first aspect of an example of the present invention, a method for recognizing a gripping posture is provided. The method is applied to a terminal. The terminal includes a foldable screen. The foldable screen includes a first screen and a second screen. The method includes:
obtaining first sensor data of a touch sensor arranged on a side bezel of the first screen;
obtaining a touch parameter of the second screen; and
determining a gripping posture of the terminal according to the sensor data and the touch parameter, where the gripping posture includes a single-sided gripping on first side, a single-sided gripping on second side or a double-sided gripping.

Optionally, the determining the gripping posture of the terminal according to the first sensor data and the touch parameter includes:
obtaining a difference between the first sensor data and second sensor data, where the second sensor data is sensor data of the touch sensor in a non-touch state;
determining a touch area on the second screen according to the touch parameter; and
determining the gripping posture of the terminal according to the difference and the touch area.

Optionally, the determining the gripping posture of the terminal according to the difference and the touch area includes:
determining the gripping posture as the single-sided gripping on first side in case the difference is greater than a set difference threshold and the touch area is less than a set area threshold.

Optionally, the determining the gripping posture of the terminal according to the difference and the touch area includes:
determining the gripping posture as the single-sided gripping on second side in case the difference is less than a set difference threshold and the touch area is greater than a set area threshold.

Optionally, the determining the gripping posture of the terminal according to the difference and the touch area includes:
determining the gripping posture as the double-sided gripping in case the difference is greater than a set difference threshold and the touch area is greater than a set area threshold.

Optionally, the determining the touch area on the second screen according to the touch parameter includes:
obtaining, in case the touch parameter includes at least one touch point coordinate, the touch area according to the at least one touch point coordinate; and
determining that the touch area is zero in case the touch parameter includes no touch point coordinate.

Optionally, the method further includes:
adjusting, in case the gripping posture is the single-sided gripping on first side, display interfaces of the first screen and the second screen to display an interface of a single-handed mode corresponding to the single-sided gripping on first side;
adjusting, in case the gripping posture is the single-sided gripping on second side, the display interfaces of the first screen and the second screen to display an interface of a single-handed mode corresponding to the single-sided gripping on second side; and
adjusting, in case the gripping posture is the double-sided gripping, the display interfaces of the first screen and the second screen to display an interface of a double-handed mode.

Optionally, the first screen is a screen located on a right side when the foldable screen is unfolded, the second screen is a screen located on a left side when the foldable screen is unfolded, the single-sided gripping on first side is a right-handed gripping, and the single-sided gripping on second side is a left-handed gripping; or
the first screen is a screen located on a left side when the foldable screen is unfolded, the second screen is a screen located on a right side when the foldable screen is unfolded, the single-sided gripping on first side is a left-handed gripping, and the single-sided gripping on second side is a right-handed gripping.

Optionally, the touch sensor includes a specific absorption rate (SAR) sensor, and the first sensor data is a specific absorption rate.

According to a second aspect of an example of the present invention, an apparatus for recognizing a gripping posture is provided. The apparatus is applied to a terminal. The terminal includes a foldable screen. The foldable screen includes a first screen and a second screen. The apparatus includes:
a data obtention module configured to obtain first sensor data of a touch sensor arranged on a side bezel of the first screen;
a parameter obtention module configured to obtain a touch parameter of the second screen; and
a posture determination module configured to determine a gripping posture of the terminal according to the sensor data and the touch parameter, where the gripping posture includes a single-sided gripping on first side, a single-sided gripping on second side or a double-sided gripping.

According to a third aspect of an example of the present invention, an apparatus for recognizing a gripping posture is provided. The apparatus is applied to an electronic device. The electric device includes: a processor; and a memory configured to store a processor-executable instruction.

The processor is configured to execute the executable instruction to implement steps of the method for recognizing a gripping posture mentioned in any embodiment of the first aspect mentioned above.

According to a fourth aspect of an example of the present invention, a computer-readable storage medium is provided. The computer-readable storage medium stores a computer program instruction. The program instruction implements steps of the method for recognizing a gripping posture mentioned in the first aspect of the present invention when executed by a processor.

According to a fifth aspect of an example of the present invention, a chip is provided. The chip includes a processor and an interface. The processor is configured to read an instruction to execute steps of the method for recognizing a gripping posture mentioned in the first aspect of the present invention.

Technical solutions provided in examples of the present invention may include beneficial effects as follows:
in the above technical solution, the first sensor data of the touch sensor arranged on the side bezel of the first screen of the terminal foldable screen is obtained, the touch parameter of the second screen of the terminal foldable screen is obtained, and the gripping posture of the terminal is determined according to the sensor data and the touch parameter. The gripping posture includes the single-sided gripping on first side, the single-sided gripping on second side or the double-sided gripping. According to the above technical solution, the gripping posture of the terminal is determined by using the first sensor data of the first screen of the foldable screen and the touch parameter of the second screen such that the gripping posture of the foldable-screen terminal can be recognized, and an accuracy rate of recognizing the gripping posture of the terminal can be improved to a certain extent.

It should be understood that the above general descriptions and the following detailed descriptions are illustrative and explanatory merely, and cannot limit the present invention.

### BRIEF DESCRIPTION OF DRAWINGS

The accompanying drawings here are incorporated into the description as a constituent part of the description, illustrate examples conforming to the present invention, and serve to explain principles of the present invention along with the description.
Fig. 1 is a flow diagram of a method for recognizing a gripping posture according to an example.
Fig. 2 is a schematic structural diagram of a foldable-screen terminal in an unfolded state according to an example.
Fig. 3 is a flow diagram of another method for recognizing a gripping posture according to an example.
Fig. 4 is a flow diagram of yet another method for recognizing a gripping posture according to an example.
Fig. 5 is a schematic diagram of a display interface of a terminal according to an example.
Fig. 6 is a block diagram of an apparatus for recognizing a gripping posture according to an example.
Fig. 7 is a block diagram of another apparatus for recognizing a gripping posture according to an example.

### DETAILED DESCRIPTION OF THE INVENTION

Examples will be described in detail here and shown in accompanying drawings illustratively. When the following descriptions relate to accompanying drawings, unless otherwise specified, the same numeral in different accompanying drawings denotes the same or similar elements. The embodiments described in the following examples do not denote all embodiments consistent with the present invention. On the contrary, the embodiments are merely instances of apparatuses and methods consistent with some aspects of the present invention as detailed in the appended claims.

It can be understood that the term "plurality" in the present invention refers to two or above, and other quantifiers are understood in a similar way. The term "and/or" describing an association relation between associated objects indicates that there can be three relations. For instance, A and/or B can represent A alone, both A and B, and B alone. The character "/" generally indicates that associated objects in the context are in an "or" relation. The singular forms such as "a", "an", "the", "this" and "these" used are also intended to include the plural forms, unless otherwise clearly stated in the context.

It can be further understood that the terms "first", "second", etc. are used for describing various information, but this information should not be limited by these terms. These terms are merely used to distinguish the same type of information from each other, and do not denote any specific order or importance. In fact, the expressions "first", "second", etc. can be used interchangeably. For instance, a first screen can also be referred to as a second screen, and similarly, a second screen can also be referred to as a first screen, without departing from the scope of the present invention.

It can be further understood that although operations are described in the accompanying drawings in specific order in examples of the present invention, it should not be understood that these operations are required to be executed in shown specific order or in serial order, or that all illustrated operations are required to be executed so as to realize expected results. In specific environments, multitasking and parallel processing may be advantageous.

It should be noted that all actions to acquire signals, information or data in the present invention are carried out under the premise of complying with corresponding data protection laws and policies of a country where an apparatus is located and obtaining authorization from the owner of the corresponding apparatus.

A foldable-screen terminal generally include a main screen and a secondary screen. In a folded state, the secondary screen can be folded on a back of the terminal. In an unfolded state, the main screen and the secondary screen can constitute a screen having a larger size such that a foldable screen can be unfolded to expand a terminal screen while functions of an ordinary single-screen terminal are satisfied.

Moreover, the applicant finds that the foldable-screen terminal also has corresponding problems. Compared with a single-screen terminal, due to screen expansion of the foldable-screen terminal, a single-handed control range cannot cover the entire screen when the foldable-screen terminal is used in an unfolded state. Thus, it is required to recognize a hand when a user holds a terminal. Most existing recognition of a gripping posture of a user is currently applied to the single-screen terminal, and is generally performed by analyzing touch data of a screen. For instance, left and right hands when a user holds a terminal are recognized by computing trajectory slope according to a trajectory trend of a slide on a terminal screen by a user. Alternatively, left and right hands when a user holds a device are recognized by a deflection angle sensor in the device by using an inward inclination angle when the user holds the terminal. However, a user daily uses a terminal in plenty of cases, and this single determination standard will lead to a low accuracy rate of recognition, such that a gesture when the user holds the terminal is mistakenly determined. Moreover, the above method is mostly used for single-screen terminals, and is not suitable for foldable-screen terminals. Thus, the solution provides a method for recognizing a gripping posture to solve these technical problems.

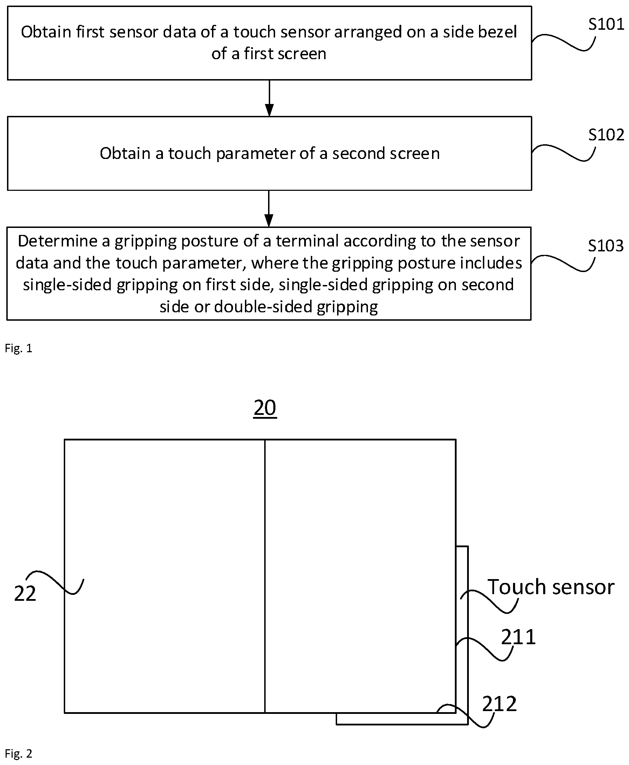

Fig. 1 is a flow diagram of a method for recognizing a gripping posture according to an example. As shown in Fig. 1, this method is used in a terminal. This terminal may be the above foldable-screen terminal and includes a foldable screen. This foldable screen includes a first screen and a second screen. The method includes the following steps.

In step S101, first sensor data of a touch sensor arranged on a side bezel of a first screen.

It can be understood that the foldable screen of this terminal includes a first screen and a second screen. One of the first screen and the second screen is a main screen and is arranged on a front of the terminal. The other one is a secondary screen and is located on a back of the terminal in a folded state. In the folded state, the main screen and the secondary screen may serve as two separate screens to display different contents respectively. In an unfolded state, the first screen and the second screen together constitute a combined screen having a larger size. The touch sensor is arranged on the side bezel of the first screen. This side bezel provided with the touch sensor is a side bezel of this first screen away from this second screen.

When a user holds the first screen, a corresponding hand touches the touch sensor arranged on the side bezel of the first screen. In this case, sensor data of the touch sensor changes, the touch sensor uploads first sensor data currently measured to (a processor of) the terminal, and the terminal may determine whether the first screen is held according to the first sensor data. This terminal may be a foldable-screen smart phone, or a foldable-screen tablet computer, etc.

ln step S102, obtain a touch parameter of a second screen.

Correspondingly, when the user touches the second screen, this second screen will receive a touch signal. After detecting the touch signal, the second screen sends a corresponding touch parameter to (the processor of) the terminal, and the terminal determines whether the second screen is held based on this touch parameter.

For example, Fig. 2 is a schematic structural diagram of a foldable-screen terminal in an unfolded state according to an example. As shown in Fig. 2, this foldable-screen terminal 20 includes a first screen 21 and a second screen 22, and a touch sensor is arranged on a side bezel of the first screen 21 away from the second screen 22.

Optionally, as shown in Fig. 2, this touch sensor may be distributed in an L shape and arranged on a side bezel 211 and a bottom frame 212 of the first screen 21, so as to cover a position on a right side of the terminal that is easy to hold.

In step S103, determine a gripping posture of this terminal according to the sensor data and the touch parameter, where the gripping posture includes a single-sided gripping on first side, a single-sided gripping on second side or a double-sided gripping.

The terminal device determines whether the first screen is held according to the sensor data and whether the second screen is held according to the touch parameter, so as to determine whether the gripping posture of the terminal is a single-sided gripping on first side, a single-sided gripping on second side or a double-sided gripping according to whether the first screen and the second screen are held. The single-sided gripping on first side refers to one side of the first screen is held by one hand. The single-sided gripping on second side refers to one side of the second screen is held by one hand. The double-sided gripping refers to the first screen and the second screen are held by two hands at the same time. Based on a positional relation between the first screen 21 and the second screen 22 in Fig. 2, this first screen 21 is a screen located on a right side when the foldable screen is in an unfolded state, and this second screen 22 is a screen located on a left side when the foldable screen is in the unfolded state. Accordingly, this single-sided gripping on first side is right-handed single-sided gripping, and the single-sided gripping on second side is left-handed single-sided gripping.

It can be understood that when the foldable screen of this terminal is in a folded state, the second screen is located on a back of the terminal. In this state, when this terminal is held by a right hand, the right hand will touch this touch sensor and the second screen at the back. When this terminal is held by a left hand, the left hand will touch the second screen at the back, but a touched region is different from a touched region of the second screen during right-handed holding, and the touch sensor will not be touched. Based on this, sensor parameters and touch parameters collected when the terminal is held by the right hand and the left hand are different. Based on the above principle, the terminal device may also accurately recognize whether the gripping posture of a terminal in the folded state is the single-sided gripping on first side or the single-sided gripping on second side according to the sensor data and the touch parameter.

Optionally, a method for detecting whether this first screen is held and a method for detecting whether this second screen is held can be interchanged. That is, the touch sensor can also be arranged on the side bezel of the second screen. Thus, whether the second screen is held is determined by the touch sensor, and whether the first screen is held is determined by using the touch parameter. Alternatively, in another implementation, touch sensor may be arranged on the side bezel of the first screen and the side bezel of the second screen, such that whether these first screen and second screen are held is detected by the touch sensor. The detection method is the same as the above method, and will not be repeated.

Optionally, this touch sensor includes a specific absorption rate (SAR) sensor, and accordingly, this first sensor data is a specific absorption rate.

This touch parameter may include a touch point coordinate. This touch point coordinate may be configured to compute a touch area and determine whether the second screen is held based on this touch area.

In the above technical solution, the first sensor data of the touch sensor arranged on the side bezel of the first screen of the terminal foldable screen is obtained, the touch parameter of the second screen of this terminal foldable screen is obtained, and the gripping posture of the terminal is determined according to this sensor data and this touch parameter. This gripping posture includes the single-sided gripping on first side, the single-sided gripping on second side or the double-sided gripping. According to the above technical solution, the gripping posture of the terminal is determined by using the first sensor data of the first screen of the foldable screen and the touch parameter of the second screen such that the gripping posture of the foldable-screen terminal can be recognized, and an accuracy rate of recognizing the gripping posture of the terminal can be improved to a certain extent.

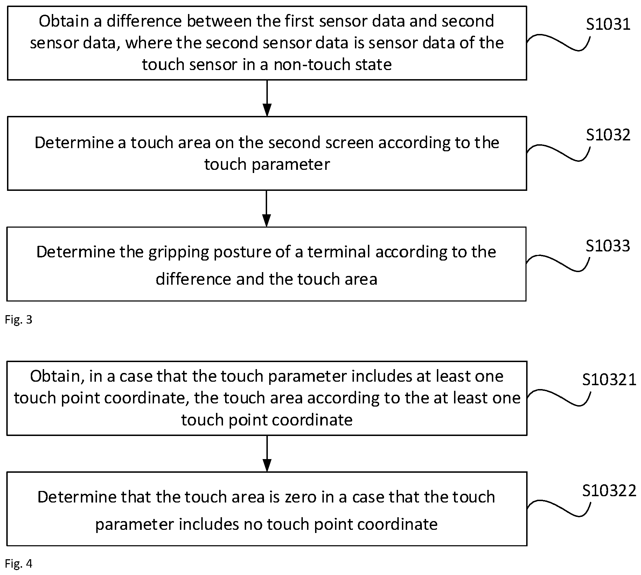

Optionally, Fig. 3 is a flow diagram of another method for recognizing a gripping posture according to an example. As shown in Fig. 3, S103 may include steps as follows.

In step S1031, obtain a difference between the first sensor data and second sensor data, where the second sensor data is sensor data of the touch sensor in a non-touch state.

In step S1032, determine a touch area on the second screen according to the touch parameter.

It can be understood that if the user touches the second screen when holding the terminal, the second screen will generate a touch signal, such that this touch parameter is generated. Data included in this touch parameter may be configured to compute a touch area of the second screen touched by the user.

In step S1033, determine the gripping posture of a terminal according to the difference and the touch area.

Optionally, S1033 may further include: determine this gripping posture as the single-sided gripping on first side in case this difference is greater than a set difference threshold and this touch area is less than a set area threshold.

Determine this gripping posture as the single-sided gripping on second side in case this difference is less than a set difference threshold and this touch area is greater than a set area threshold.

Determine this gripping posture as the double-sided gripping in case this difference is greater than a set difference threshold and this touch area is greater than a set area threshold.

It can be understood that in case this difference is equal to the set difference threshold and this touch area is less than the set area threshold, this gripping posture can also be determined as the single-sided gripping on first side.

It is worth mentioning that in case this touch area is equal to the set area threshold, and this difference is less than the set difference threshold, this gripping posture can also be determined as the single-sided gripping on second side. Correspondingly, in case this difference is less than the set difference threshold and this touch area is less than the set area threshold, it can be determined that the gripping posture of this terminal is neither the single-sided gripping on first side, nor the single-sided gripping on second side, nor the double-sided gripping.

With the SAR sensor as an instance, after a first specific absorption rate sent by the SAR sensor is received, the first specific absorption rate is compared with a second specific absorption rate of the SAR sensor in a non-touch state, and a difference between the first specific absorption rate and the second specific absorption rate is obtained. If the difference between the first specific absorption rate and the second specific absorption rate is greater than a set specific absorption rate threshold, it can be determined that one side of the first screen where the SAR sensor is located is held. In case the touch area of the second screen is greater than the set area threshold, it can be determined that one side of the second screen is held. Thus, whether the gripping posture is the single-sided gripping on first side, the single-sided gripping on second side or the double-sided gripping, can be determined based on this difference and this touch area.

Optionally, Fig. 4 is a flow diagram of another method for recognizing a gripping posture according to an example. As shown in Fig. 4, S1032 may include steps as follows.

In step S10321, obtain, in case the touch parameter includes at least one touch point coordinate, the touch area according to the at least one touch point coordinate.

In step S10322, determine that the touch area is zero in case the touch parameter includes no touch point coordinate.

It can be understood that when the user holds the second screen, the left hand of the user touches the second screen. In this case, this touch parameter is obtained. The touch parameter include a touch point coordinate collected by the second screen. There may be one or more touch point coordinates. The touch area between the hand of the user and the second screen can be obtained according to these touch point coordinates. In case the first screen and the second screen of this terminal are unfolded, and this touch area is greater than the area threshold, it can be determined that one side of the second screen of the terminal is held.

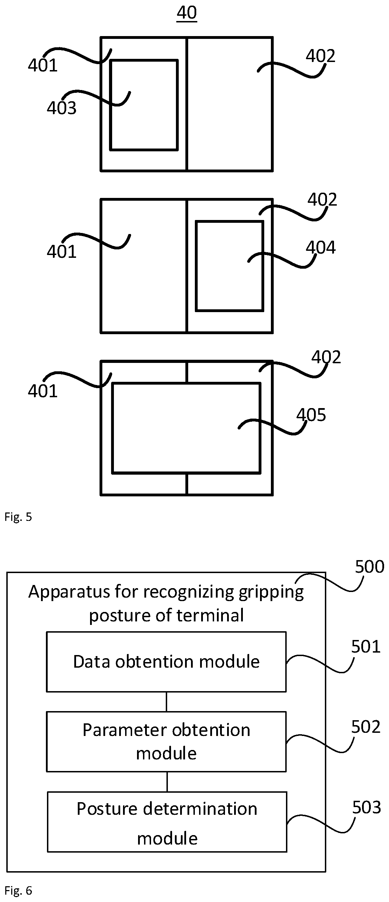

Optionally, Fig. 5 is a schematic diagram of a display interface of a terminal according to an example. As shown in Fig. 5, in the terminal 40, in case this gripping posture is a single-sided gripping on first side, display interfaces of the first screen 401 and the second screen 402 are adjusted to display interfaces 403 of a single-handed mode corresponding to the single-sided gripping on first side. In case this gripping posture is the single-sided gripping on second side, the display interfaces of the first screen 401 and the second screen 402 are adjusted to display interfaces 404 of a single-handed mode corresponding to the single-sided gripping on second side. In case this gripping posture is the double-sided gripping, the display interfaces of the first screen 401 and the second screen 402 are adjusted to display interfaces 405 of a double-handed mode.

Optionally, this first screen is a screen located on a right side when this foldable screen is unfolded, this second screen is a screen located on a left side when this foldable screen is unfolded, this single-sided gripping on first side is a right-handed gripping, and this single-sided gripping on second side is a left-handed gripping; or

this first screen is a screen located on a left side when this foldable screen is unfolded, this second screen is a screen located on a right side when this foldable screen is unfolded, this single-sided gripping on first side is a left-handed gripping, and this single-sided gripping on second side is a right-handed gripping.

It can be understood that a position of the SAR sensor can be adjusted. In case this first screen is a screen located on a right side when the foldable screen is unfolded, the SAR sensor is arranged on the side bezel of the screen on the right side of the terminal, and accordingly a single-sided gripping on first side is a right-handed single-handed holding of a user. In case this second screen is a screen on a left side when the foldable screen is unfolded, the second screen is configured to measure a touch parameter after the left hand of the user touches the second screen on the left side, such that a touch area between the left hand of the user and the second screen is obtained. Moreover, a single-sided gripping on second side is a left-handed single-handed holding of a user.

Alternatively, in case the first screen is a screen located on a left side when the foldable screen is in an unfolded state, the SAR sensor is arranged on a side bezel of a screen on the left side of the terminal, and accordingly a single-sided gripping on first side is a left-handed single-handed holding of a user. In case this second screen is a screen located on a right side when the foldable screen is unfolded, the second screen is configured to measure a touch parameter after the right hand of the user touches the second screen on the right side, such that a touch area between the right hand of the user and the second screen is obtained. Moreover, a single-sided gripping on second side is a right-handed single-handed holding of a user.

According to the above technical solution, whether the gripping posture of the terminal is the gripping on first side, the gripping on second side or the double-sided gripping, is determined according to the difference between the first sensor data and the second sensor data of the touch sensor and through comparison between the touch area of the screen and the area threshold. And arrangement positions of the touch sensor and the secondary screen are described. Moreover, display interfaces of the terminal can also correspondingly change in cases of different terminal holding postures. Application flexibility is improved while the gripping posture of the terminal is determined, and the display interfaces are correspondingly changed after the gripping posture of the terminal is determined, such that user experience is improved to a certain extent.

Fig. 6 is a block diagram of an apparatus for recognizing a gripping posture according to an example. This apparatus is used in a terminal. This terminal includes a foldable screen. This foldable screen includes a first screen and a second screen. As shown in Fig. 6, this apparatus 500 for recognizing a gripping posture may include:
a data obtention module 501, which is configured to obtain first sensor data of a touch sensor arranged on a side bezel of this first screen;
a parameter obtention module 502, which is configured to obtain a touch parameter of this second screen; and
a posture determination module 503, which is configured to determine a gripping posture of this terminal according to this sensor data and this touch parameter, where this gripping posture includes a single-sided gripping on first side, a single-sided gripping on second side or a double-sided gripping.

In the above technical solution, the first sensor data of the touch sensor arranged on the side bezel of the first screen of the terminal foldable screen is obtained, the touch parameter of the second screen of this terminal foldable screen is obtained, and the gripping posture of the terminal is determined according to this sensor data and this touch parameter. This gripping posture includes the single-sided gripping on first side, the single-sided gripping on second side or the double-sided gripping. According to the above technical solution, the gripping posture of the terminal is determined by using the first sensor data of the first screen of the foldable screen and the touch parameter of the second screen such that the gripping posture of the foldable-screen terminal can be recognized, and an accuracy rate of recognizing the gripping posture of the terminal can be improved to a certain extent.

Optionally, this posture determination module 503 is configured to:
obtain a difference between this first sensor data and second sensor data, where this second sensor data is sensor data of this touch sensor in a non-touch state;
determine a touch area on this second screen according to this touch parameter; and
determine the gripping posture of this terminal according to this difference and this touch area.

Optionally, this posture determination module 503 is configured to:
determine this gripping posture as the single-sided gripping on first side in case this difference is greater than a set difference threshold and this touch area is less than a set area threshold.

Optionally, this posture determination module 503 is configured to:
determine this gripping posture as the single-sided gripping on second side in case this difference is less than a set difference threshold and this touch area is greater than a set area threshold.

Optionally, this posture determination module 503 is configured to:
determine this gripping posture as the double-sided gripping in case this difference is greater than a set difference threshold and this touch area is greater than a set area threshold.

Optionally, this posture determination module 503 is configured to:
obtain, in case this touch parameter includes at least one touch point coordinate, this touch area according to this at least one touch point coordinate; and
determine that this touch area is zero in case this touch parameter includes no touch point coordinate.

Optionally, this apparatus 500 for recognizing a gripping posture may further include an interface control module, which is configured to:
adjust, in case this gripping posture is the single-sided gripping on first side, display interfaces of this first screen and this second screen to display interfaces of a single-handed mode corresponding to the single-sided gripping on first side;
adjust, in case this gripping posture is the single-sided gripping on second side, the display interfaces of this first screen and this second screen to display interfaces of a single-handed mode corresponding to the single-sided gripping on second side; and
adjust, in case this gripping posture is the double-sided gripping, the display interfaces of this first screen and this second screen to display interfaces of a double-handed mode.

Optionally, this first screen is a screen located on a right side when this foldable screen is unfolded, this second screen is a screen located on a left side when this foldable screen is unfolded, this single-sided gripping on first side is right-handed holding, and this single-sided gripping on second side is left-handed holding; or
this first screen is a screen located on a left side when this foldable screen is unfolded, this second screen is a screen located on a right side when this foldable screen is unfolded, this single-sided gripping on first side is left-handed holding, and this single-sided gripping on second side is right-handed holding.

According to the above technical solution, the terminal can determine whether the gripping posture of the terminal is the first-side holding, the second-side holding or the double-sided gripping according to a difference between the first sensor data and the second sensor data of the touch sensor and through comparison between the touch area of the screen and the area threshold. Moreover, in cases of different terminal holding postures, the display interface of the terminal can be adaptively adjusted such that flexibility of interface display can be improved based on the terminal gripping posture, and user experience can be improved.

A method for each module of the apparatus in the above examples to execute an operation is described in detail in examples related to this method, and will not be described in detail here.

The present invention further provides a computer-readable storage medium. The computer-readable storage medium stores a computer program instruction. This program instruction implements steps of the method for recognizing a gripping posture provided in the present invention when executed by a processor.

It is worth mentioning that this terminal may also be a non-foldable-screen electronic device having a large-size screen, such as a non-foldable-screen tablet computer. A screen of this non-foldable-screen tablet computer may be divided into a first screen region and a second screen region as a first screen and a second screen respectively such that the above method can be executed.

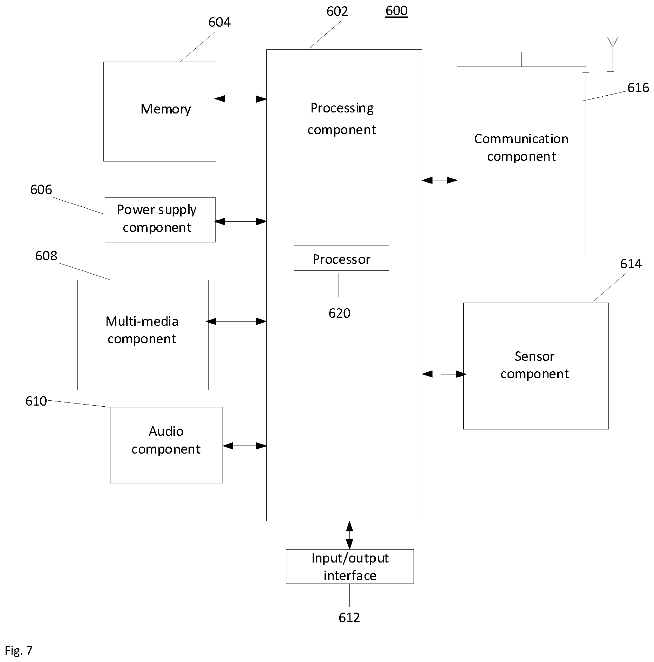

Fig. 7 is a block diagram of an apparatus 600 for recognizing a gripping posture according to an example. For instance, the apparatus 600 may be a mobile phone, a computer, a digital broadcasting terminal, a message receiving and transmitting device, a game console, a portable android device, a medical device, a fitness device, a personal digital assistant, and other electronic devices.

With reference to Fig. 7, the apparatus 600 may include one or more of components as follows: a processing component 602, a memory 604, a power supply component 606, a multi-media component 608, an audio component 610, an input/output interface 612, a sensor component 614 and a communication component 616.

The processing component 602 generally controls overall operations of the apparatus 600, such as operations associated with display, telephone call, data communication, camera operations and record operations. The processing component 602 may include one or more processors 620 to execute an instruction, so as to complete all or some steps of the above method. In addition, the processing component 602 may include one or more modules such that the processing component 602 and other components can interact with each other. For instance, the processing component 602 may include a multi-media module such that the multi-media component 608 and the processing component 602 can interact with each other.

The memory 604 is configured to store various types of data to support operations at the apparatus 600. Instances of such data include instructions configured for any application or method operating on the apparatus 600, such as contact data, phonebook data, messages, pictures and video. The memory 604 may be implemented by any type of volatile or non-volatile storage devices or their combinations, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 606 provides power for various components of the apparatus 600. The power supply component 606 may include a power supply management system, one or more power supplies, and other components associated with generation, management and power distribution of the apparatus 600.

The multi-media component 608 includes a screen that provides an output interface between the apparatus 600 and a user. In some examples, the screen may include a liquid crystal display (LCD) and a touch panel (TP). If the screen includes a touch panel, the screen can be implemented as a touch screen to receive an input signal from a user. The touch panel includes one or more touch sensors to sense a touch, a swipe and a gesture on the touch panel. The touch sensor can not only sense a boundary of a touch or a swipe, but also measure duration and force associated with the touch or the swipe. In some examples, the multi-media component 608 includes a front-facing camera and/or a rear-facing camera. When the apparatus 600 is in an operating mode, such as a photographing mode or a video mode, the front-facing camera and/or the rear-facing camera can receive external multi-media data. Each of the front-facing camera and the rear-facing camera may be a fixed optical lens system or have focusing and optical zooming capabilities.

The audio component 610 is configured to output and/or input an audio signal. For instance, the audio component 610 includes a microphone (MIC). When the apparatus 600 is in an operating mode, such as a call mode, a recording mode or a voice recognition mode, the microphone is configured to receive an external audio signal. The received audio signal may be further stored in the memory 604 or transmitted by means of the communication component 616. In some examples, the audio component 610 further includes a loudspeaker configured to output an audio signal.

The input/output interface 612 provides an interface between the processing component 602 and peripheral interface modules, which may be keyboards, click wheels, buttons, etc. These buttons may include but are not limited to a home button, a volume button, a start button and a lock button.

The sensor component 614 includes one or more sensors, which are configured to provide state assessment of various aspects for the apparatus 600. For instance, the sensor component 614 may detect a startup/shutdown state of the apparatus 600, and relative positioning of components, which are a display and a keypad of the apparatus 600 for instance. The sensor component 614 may further detect a position change of the apparatus 600 or an component of the apparatus 600, presence or absence of a touch between a user and the apparatus 600, an orientation or acceleration/deceleration of the apparatus 600, and a temperature change of the apparatus 600. The sensor component 614 may include a proximity sensor, which is configured to detect the presence of a nearby object in the absence of any physical touch. The sensor component 614 may further include a light sensor, such as a complementary metal oxide semiconductor (CMOS) or charge coupled device (CCD) image sensor, which are configured to be used in imaging applications. In some examples, this sensor component 614 may further include an acceleration sensor, a gyroscopic sensor, a magnetic sensor, a pressure sensor or a temperature sensor.

The communication component 616 is configured to facilitate wired or wireless communication between the apparatus 600 and other devices. The apparatus 600 may access a wireless network based on a communication standard, such as Wi-Fi, 2G, 3G, or their combinations. In an example, the communication component 616 receives a broadcast signal or broadcast related information from an external broadcast management system by means of a broadcast channel. In an example, the communication component 616 further includes a near-field communication (NFC) module to promote short-range communication. For instance, the NFC module may be implemented based on a radio frequency identification (RFID) technology, an infrared data association (IrDA) technology, an ultra wideband (UWB) technology, a Bluetooth (BT) technology and other technologies.

In an example, the apparatus 600 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic elements, and is configured to execute the above method for recognizing a gripping posture.

In an example, a non-transitory computer-readable storage medium including an instruction is further provided, such as a memory 604 including an instruction. The above instruction may be executed by the processor 620 of the apparatus 600 to complete the above method for recognizing a gripping posture. For instance, the non-transitory computer-readable storage medium may be an ROM, a random access memory (RAM), a compact disc read-only memory (CD-ROM), a magnetic tape, a floppy disk or an optical data storage device, etc.

The above apparatus may be an independent electronic device, or may be a part of an independent electronic device. For instance, in an example, this apparatus may be an integrated circuit (IC) or a chip, and this integrated circuit may be one IC or a set of a plurality of ICs. This chip may include but is not limit to types as follows: a graphics processing unit (GPU), a central processing unit (CPU), a field programmable gate array (FPGA), a digital signal processor (DSP), an application specific integrated circuit (ASIC), a system on chip (SOC), etc. The above integrated circuit or chip may be configured to execute an executable instruction (or code) to implement the above method for recognizing a gripping posture. This executable instruction may be stored in this integrated circuit or chip, or retrieved from other apparatuses or devices. For instance, this integrated circuit or chip includes a processor, a memory, and interfaces for communication with other apparatuses. This executable instruction may be stored in this memory, and implement the above method for recognizing a gripping posture when executed by the processor. Alternatively, this integrated circuit or the chip may receive the executable instruction through this interface and transmit the executable instruction to this processor for execution, so as to implement the above method for recognizing a gripping posture.

In another example, a computer program product is provided. This computer program product includes a computer program capable of being executed by a programmable apparatus. This computer program has a code portion, which is configured to execute the above method for recognizing a gripping posture when executed by the programmable apparatus.

A person skilled in the art could easily conceive of other implementation solutions of the present invention upon consideration of the description and the present invention disclosed in the implementation. The present invention is intended to cover any variations, uses or adaptive changes of the present invention, which follow the general principles of the present invention and include common general knowledge or customary technical means in the art that is not disclosed in the present invention. The description and examples are regarded as illustrative merely. The true scope and spirit of the present invention are indicated by the following claims.

It should be understood that the present invention is not limited to a precise structure described above and shown in accompanying drawings, and can have various modifications and changes without departing from the scope of the present invention. The scope of the present invention is limited by the appended claims merely.

## Claims

1. A method for recognizing a gripping posture, applied to a terminal, wherein the terminal comprises a foldable screen, the foldable screen comprises a first screen and a second screen, and the method comprises:
obtaining first sensor data of a touch sensor arranged on a side bezel of the first screen;
obtaining a touch parameter of the second screen; and
determining a gripping posture of the terminal according to the sensor data and the touch parameter, wherein the gripping posture comprises a single-sided gripping on first side, a single-sided gripping on second side or a double-sided gripping.

2. The method according to claim 1, wherein the determining the gripping posture of the terminal according to the first sensor data and the touch parameter comprises:
obtaining a difference between the first sensor data and second sensor data, wherein the second sensor data is sensor data of the touch sensor in a non-touch state;
determining a touch area on the second screen according to the touch parameter; and
determining the gripping posture of the terminal according to the difference and the touch area.

3. The method according to claim 2, wherein the determining the gripping posture of the terminal according to the difference and the touch area comprises:
determining the gripping posture as the single-sided gripping on first side in case the difference is greater than a set difference threshold and the touch area is less than a set area threshold.

4. The method according to claim 2, wherein the determining the gripping posture of the terminal according to the difference and the touch area comprises:
determining the gripping posture as the single-sided gripping on second side in case the difference is less than a set difference threshold and the touch area is greater than a set area threshold.

5. The method according to claim 2, wherein the determining the gripping posture of the terminal according to the difference and the touch area comprises:
determining the gripping posture as the double-sided gripping in case the difference is greater than a set difference threshold and the touch area is greater than a set area threshold.

6. The method according to claim 2, wherein the determining the touch area on the second screen according to the touch parameter comprises:
obtaining, in case the touch parameter comprises at least one touch point coordinate, the touch area according to the at least one touch point coordinate; and
determining that the touch area is zero in case the touch parameter comprises no touch point coordinate.

7. The method according to claim 1, wherein the method further comprises:
adjusting, in case the gripping posture is the single-sided gripping on first side, display interfaces of the first screen and the second screen to display an interface of a single-handed mode corresponding to the single-sided gripping on first side;
adjusting, in case the gripping posture is the single-sided gripping on second side, the display interfaces of the first screen and the second screen to display an interface of a single-handed mode corresponding to the single-sided gripping on second side; and
adjusting, in case the gripping posture is the double-sided gripping, the display interfaces of the first screen and the second screen to display an interface of a double-handed mode.

8. The method according to any one of claims 1-7, wherein
the first screen is a screen located on a right side when the foldable screen is unfolded, the second screen is a screen located on a left side when the foldable screen is unfolded, the single-sided gripping on first side is a right-handed gripping, and the single-sided gripping on second side is a left-handed gripping; or
the first screen is a screen located on a left side when the foldable screen is unfolded, the second screen is a screen located on a right side when the foldable screen is unfolded, the single-sided gripping on first side is a left-handed gripping, and the single-sided gripping on second side is a right-handed gripping.

9. The method according to any one of claims 1-7, wherein the touch sensor comprises a specific absorption rate (SAR) sensor, and the first sensor data is a specific absorption rate.

10. An apparatus for recognizing a gripping posture, applied to a terminal, wherein the terminal comprises a foldable screen, the foldable screen comprises a first screen and a second screen, and the apparatus comprises:
a data obtention module configured to obtain first sensor data of a touch sensor arranged on a side bezel of the first screen;
a parameter obtention module configured to obtain a touch parameter of the second screen; and
a posture determination module configured to determine a gripping posture of the terminal according to the sensor data and the touch parameter, wherein the gripping posture comprises a single-sided gripping on first side, a single-sided gripping on second side or a double-sided gripping.

11. An electronic device, applied to a terminal, wherein the terminal comprises a foldable screen, the foldable screen comprises a first screen and a second screen, and the electronic device comprises:
a processor; and
a memory configured to store a processor-executable instruction; wherein
the processor is configured to:
execute the executable instruction to implement steps of the method according to any one of claims 1-9.

12. A computer-readable storage medium, storing a computer program instruction, wherein the program instruction implements steps of the method according to any one of claims 1-9 when executed by a processor.

13. A chip comprising a processor and an interface, wherein the processor is configured to read an instruction to execute the method according to any one of claims 1-9.
